# EUROPÄISCHE PATENTSCHRIFT

(11) **EP 3 596 802 B1**
(45) Veröffentlichungstag und Bekanntmachung des Hinweises auf die Patenterteilung: **01.05.2024**
(21) Anmeldenummer: 18710411.2
(22) Anmeldetag: 07.03.2018
(51) Int. Cl.: H02K 1/14

(54) **KLAUENPOL-STATOR FÜR EINEN TRANSVERSALFLUSS-MOTOR UND EIN SEGMENT FÜR DEN KLAUENPOL-STATOR**
CLAW POLE STATOR FOR A TRANSVERSAL FLUX MOTOR AND A SEGMENT FOR THE CLAW POLE STATOR
STATOR À PÔLE À GRIFFES POUR UN MOTEUR À FLUX TRANSVERSE ET SEGMENT POUR LE STATOR À PÔLE À GRIFFES

(30) Priorität: 14.03.2017 DE 102017105361
(43) Veröffentlichungstag der Anmeldung: 22.01.2020
(73) Patentinhaber: GKN Sinter Metals Engineering GmbH, 42477 Radevormwald (DE)
(72) Erfinder: BORNEMANN, Nils, 53179 Bonn (DE); TILLER, Stefan, 53757 Sankt Augustin (DE); SCHMITT, Rainer, 53343 Wachtberg (DE); TO, Hong Giang, 40231 Düsseldorf (DE)
(74) Vertreter: karo IP
(86) Internationale Anmeldenummer: PCT/EP2018/055561
(87) Internationale Veröffentlichungsnummer: WO 2018/166858

(56) Entgegenhaltungen:
- WO-A1-98/39572
- DE-B4-102009 021 703
- US-A1- 2012 119 599
- US-A1- 2012 235 519
- US-A1- 2013 154 397

## Beschreibung

Die Erfindung betrifft einen Klauenpol-Stator für einen Transversalfluss-Motor und ein Segment für einen Klauenpol-Stator. Transversalfluss-Motoren sind elektrische Antriebe, die als Generator und als elektrische Maschine einsetzbar sind. Transversalfluss-Motoren umfassen regelmäßig einen Stator und einen Rotor. Der Rotor wird hier als der Träger von Permanentmagneten bezeichnet, während der Stator eine Spulenanordnung aufweist. Der Rotor oder der Stator kann mit einer Welle verbunden sein, die durch den Transversalfluss-Motor angetrieben wird (Betrieb als elektrische Maschine) oder eine Drehbewegung auf den Transversalfluss-Motor überträgt (Generatorbetrieb).

Eine elektrische Axialflussmaschine ist z. B. aus der DE 10 2009 021 703 B4 bekannt. Dort wird unter anderem vorgeschlagen, die Magnetfluss-Joche aus mehreren Ringzylindersegmenten zu bilden. Die Ringzylindersegmente kontaktieren einander über in Umfangsrichtung weisende Seitenflächen.

Es ist besonders vorteilhaft, Klauenpol-Statoren pulvermetallurgisch herzustellen. Dafür wird ein Pulver mit einer vorbestimmten Zusammensetzung einer Presse zugeführt und verpresst. Eine nachfolgende Wärmebehandlung dient der Entfernung organischer Bestandteile. Insbesondere weisen die Pulverpartikel elektrisch isolierende Beschichtungen auf. Durch die pulvermetallurgische Herstellung können hochgenaue Bauteile erzeugt werden.

Es hat sich nun herausgestellt, dass die besondere Geometrie eines Klauenpol-Stators nicht ohne Probleme pulvermetallurgisch herstellbar ist. Insbesondere sind sich verjüngenden Pole des Klauenpol-Stators nicht ohne weiteres mit sehr homogener und hoher Dichte herstellbar.

Aus der US 2012/0235519 A1 und der US 2012/0119599 A1 sind elektrische Maschinen bekannt. Die Statoren sind als Klauenpol-Statoren ausgeführt. Der Stator besteht aus einem Lagenstapel von elektrisch leitendem Material, wobei die einzelnen Lagen voneinander elektrisch isoliert sind. Als elektrisch leitendes Material kann auch Metallpulver eingesetzt werden.

Aus der US 2013/154397 A1 ist ein pulvermetallurgisch hergestellter Stator bekannt, dessen Module über formschlüssige Strukturen miteinander verbunden sind.

Hiervon ausgehend ist es Aufgabe der vorliegenden Erfindung, die mit Bezug auf den Stand der Technik geschilderten Probleme zumindest teilweise zu lösen. Insbesondere soll ein Klauenpol-Stator vorgeschlagen werden, der zur pulvermetallurgischen Herstellung besonders geeignet ausgeführt ist.

Zur Lösung dieser Aufgabe wird ein Segment für einen Klauenpol-Stator gemäß den Merkmalen des Patentanspruchs 1 sowie ein Klauenpol-Stator gemäß Patentanspruch 4 vorgeschlagen. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Hierzu trägt ein Klauenpol-Stator für einen Transversalfluss-Motor bei, wobei der Klauenpol-Stator durch eine Vielzahl von Segmenten gebildet ist, die entlang einer Umfangsrichtung nebeneinander angeordnet sind bzw. den ringförmigen Klauenpol-Stator bilden. Jedes Segment erstreckt sich ausgehend von einer Innenumfangsfläche entlang einer radialen Richtung hin zu einer Außenumfangsfläche und ist in der Umfangsrichtung durch eine erste Seitenfläche und eine zweite Seitenfläche und in einer axialen Richtung durch eine erste Stirnfläche und eine zweite Stirnfläche begrenzt. Jedes Segment ist über die Seitenflächen mit mindestens einem weiteren Segment zur Bildung des ringförmigen Klauenpol-Stators verbunden, wobei zueinander benachbart angeordnete Segmente einander über eine erste Kontaktfläche der ersten Seitenfläche oder über eine zweite Kontaktfläche der zweiten Seitenfläche des jeweiligen Segments kontaktieren und über die Kontaktflächen eine in der Umfangsrichtung formschlüssige Verbindung ausbilden.

Insbesondere kontaktiert ein erstes Segment ein benachbart angeordnetes zweites Segment über dessen erste Kontaktfläche oder dessen zweite Kontaktfläche. Sind beide Segmente identisch zueinander, so kann das erste Segment über dessen erste Kontaktfläche das zweite Segment über dessen zweite Kontaktfläche (unmittelbar bzw. direkt) kontaktieren. Gleiches kann entsprechend für die andere zweite Seitenfläche des ersten Segments und die dort angeordnete zweite Kontaktfläche gelten.

Hier wird eine Segmentierung des Klauenpol-Stators vorgeschlagen. Die einzelnen Segmente können so mit einer kompakter ausgeführten Matrize eines Pressenwerkzeugs hergestellt werden. Insbesondere können so besondere Maßnahmen zur Herstellung einer möglichst homogenen und hohen Dichte in dem Segment einfacher umgesetzt werden.

Eine Segmentierung des Klauenpol-Stators führt jedoch zu dem Problem des Zusammenfügens der Segmente zu dem ringförmigen Klauenpol-Stator. Dabei sollte einerseits ein gutes Handling der Segmente ermöglicht werden und andererseits eine möglichst genaue Positionierung der Segmente zueinander erreicht werden können. Das ist vorliegend über die Ausbildung von in der Umfangsrichtung formschlüssigen Verbindungen zwischen benachbart angeordneten Segmenten erreichbar bzw. gewährleistet. Formschlüssige Verbindungen entstehen durch das Ineinandergreifen von mindestens zwei Verbindungspartnern (hier die Segmente). Dadurch können sich die Verbindungspartner auch ohne oder bei unterbrochener Kraftübertragung nicht lösen. Anders ausgedrückt ist bei einer formschlüssigen Verbindung der eine Verbindungspartner dem anderen im Weg (hier gegenüber einer relativen Bewegung zueinander in der Umfangsrichtung).

Mit den formschlüssigen Verbindungen können die einzelnen Segmente zu dem ringförmigen Klauenpol-Stator zusammengesetzt werden. Insbesondere können die Segmente auf einem Trägerkörper angeordnet sein, der die Segmente zumindest über deren Innenumfangsfläche oder deren Außenumfangsfläche zueinander ausrichtet bzw. ausgerichtet hält. Bevorzugt werden die Segmente dann miteinander verbunden, z. B. über einen Kunststoff, der z. B. im flüssigen Zustand dem Klauenpol-Stator zugeführt wird und dann sich verfestigt.

Der Aufbau eines Klauenpol-Stators wird nachfolgend erläutert. Es werden zwei Klauenpol-Statoren entlang der axialen Richtung nebeneinander angeordnet, wobei sie über die Stirnflächen einander kontaktieren. Jeder Klauenpol-Stator weist eine Vielzahl von Polen auf, die sich ausgehend von einer Grundfläche entlang der axialen Richtung erstrecken. Erste Pole des ersten Klauenpol-Stators und zweite Pole des zweiten Klauenpol-Stators sind entlang der Umfangsrichtung wechselweise und jeweils benachbart zueinander und in der axialen Richtung einander überlappend, aber beabstandet zueinander, angeordnet. Die Pole können an der Innenumfangsfläche oder an der Außenumfangsfläche angeordnet sein. Die Klauenpol-Statoren kontaktieren dann einander über die Stirnflächen an der Au-ßenumfangsfläche oder an der Innenumfangsfläche. In dem Zwischenraum der Klauenpol-Statoren, in der axialen Richtung zwischen den Stirnflächen und in der radialen Richtung zwischen den sich kontaktierenden Stirnflächen und den Polen kann eine Spule in der Umfangsrichtung umlaufend zwischen den Klauenpol-Statoren angeordnet werden. Eine Anordnung weiterer Paare von Klauenpol-Statoren mit Spulen an dem ersten Paar ist ebenfalls möglich. Dadurch können z. B. mehrphasige Transversalfluss-Motoren gebildet werden. Ein Transversalfluss-Motor kann insbesondere elektrische Leistungen von 0.01 kW [kiloWatt] bis über 5.000 kW bereitstellen.

An den Stirnflächen der Klauenpol-Statoren können Positionierungshilfen vorgesehen sein, die mit korrespondierenden Positionierungshilfen an den gegenüberliegenden Stirnflächen zusammenwirken (z. B. Erhebungen und Vertiefungen).

Erfindungsgemäß erstreckt sich zumindest eine der Kontaktflächen zwischen einem ersten Radius und einem zweiten Radius entlang der radialen Richtung mäanderförmig. "Mäanderförmig" bedeutet insbesondere mit einer Krümmung, insbesondere bezogen auf die radiale Richtung abwechselnd orientierten Krümmungsradien. "Mäanderförmig" kann der Verlauf sein, wenn sich die Kontaktfläche beidseits einer zum Verlauf der Kontaktfläche mittigen bzw. zentralen und parallel zur radialen Richtung gedachten Linie erstreckt.

Insbesondere sind die Pole in der radialen Richtung außerhalb oder innerhalb der Kontaktfläche angeordnet.

An jeder Seitenfläche des Segments ist eine Kontaktfläche vorgesehen. Die Kontaktfläche umfasst eine Teilfläche der Seitenfläche. Insbesondere erstreckt sich die Kontaktfläche über jeweils die gesamte Erstreckung der Seitenfläche entlang der axialen Richtung. Bevorzugt erstreckt sich die Kontaktfläche nur über einen Teil der Erstreckung der Seitenfläche entlang der radialen Richtung.

Entlang der radialen Richtung erstreckt sich die Kontaktfläche mäanderförmig, wobei durch die mäandernde Form der Kontaktfläche die formschlüssige Verbindung mit einem benachbart angeordneten Segment gebildet wird.

Ein solcher mäanderförmiger (aber dabei scharfkantiger) Verlauf der Kontaktfläche) wird zum Beispiel durch einen Schwalbenschwanz-Ausführung der Kontaktflächen verwirklicht.

Erfindungsgemäß weist zumindest eine der Kontaktflächen entlang des mäanderförmigen Verlaufs einen kleinsten Krümmungsradius von mindestens 1,0 mm [Millimeter], bevorzugt von mindestens 2,0 mm auf. Ein solcher Mindestradius reduziert das Risiko von Rissbildungen in dem Segment, die gerade bei scharfkantigen Ausführungen einer formschlüssigen Verbindung (z. B. ein Schwalbenschwanz) auftreten können.

Insbesondere weist die zumindest eine Kontaktfläche entlang des mäanderförmigen Verlaufs einen ausschließlich gekrümmten Verlauf auf. Insbesondere sind also in der radialen Richtung keine geradlinigen Bereich der Kontaktfläche vorgesehen. D. h. das jeder Punkt der Kontaktfläche entlang der radialen Richtung durch einen (sich entlang der radialen Richtung verändernden) Krümmungsradius gebildet ist.

Bevorzugt erstreckt sich die zumindest eine Kontaktfläche entlang des mäanderförmigen Verlaufs über eine Länge, die um einen Faktor von mindestens 1,5, insbesondere um einen Faktor von mindestens zwei (2,0), größer ist als ein Abstand zwischen dem ersten Radius und dem zweiten Radius entlang der radialen Richtung. Infolge des mäanderförmigen Verlaufs wird also die Kontaktfläche verlängert (gegenüber einem geradlinigen Verlauf zwischen dem ersten Radius und dem zweiten Radius entlang der radialen Richtung).

Eine Vergrößerung der Kontaktfläche erhöht zudem die Festigkeit des gefügten Klauenpol-Stators. Weiter wird durch den mäanderförmigen Verlauf und die Vergrößerung der Kontaktfläche das Spiel und die relative Beweglichkeit der Segmente zueinander reduziert, so dass das Handling des Klauenpol-Stators z. B. zur Anordnung auf einem Trägerkörper verbessert werden kann.

Gemäß einer ersten Ausgestaltung umfasst jedes Segment eine Mehrzahl von Polen.

Gemäß einer zweiten Ausgestaltung hat jedes Segment genau einen (einzelnen) Pol. Bei derartigen Segmenten ist eine besonders kompakte Matrize eines Presswerkzeugs, das zur Herstellung des Segments verwendet wird, einsetzbar. Weiterhin können gerade dann zusätzliche Maßnahmen zur weiteren Homogenisierung der Dichte in dem Pressteil (Grünling) in einfacher und kostengünstiger Weise getroffen werden.

Die Segmentierung erlaubt die kostengünstige und hochpräzise Herstellung eines Klauenpol-Stators, da zum einen die sehr kleinen Segmente hochgenau hergestellt und zum anderen die Segmente zueinander über eine Zentriereinrichtung (z. B. den Trägerkörper) präzise zueinander ausgerichtet und angeordnet werden können. Diese so erzeugte hochgenaue Form des Klauenpol-Stators kann anschließend durch eine fixierende Maßnahme (z. B. das Einbetten in einen Kunststoff) festgelegt werden.

Erfindungsgemäß wird vorgeschlagen, dass jedes der Segmente pulvermetallurgisch durch Verpressen und Wärmebehandeln hergestellt ist.

Bevorzugt ist der Klauenpol-Stator ausschließlich durch identisch ausgeführte Segmente gebildet. Die Segmente weisen dann erste Kontaktflächen auf, die mit den zweiten Kontaktflächen eines benachbart angeordneten identischen Segments die formschlüssige Verbindung ausbilden.

Insbesondere bildet der Klauenpol-Stator mit der Außenumfangsfläche oder der Innenumfangsfläche der Segmente eine zylinderförmige Kontur, wobei eine Umfangsfläche von Außenumfangsfläche und Innenumfangsfläche durch die Pole der Segmente gebildet ist, wobei diese Umfangsfläche eine Abweichung von der zylinderförmigen Kontur von höchstens 50 µm [Mikrometer], insbesondere von höchstens 25 µm, aufweist.

Insbesondere sind die Segmente dabei bereits in ihrer Position zueinander fixiert, z. B. durch das Einbetten in einen Kunststoff.

Es wird ein Segment für einen, insbesondere hier konkret angegebenen, Klauenpol-Stator vorgeschlagen, wobei sich das Segment ausgehend von einer Innenumfangsfläche entlang einer radialen Richtung hin zu einer Außenumfangsfläche erstreckt und in der Umfangsrichtung durch eine erste Seitenfläche und eine zweite Seitenfläche und in einer axialen Richtung durch eine erste Stirnfläche und eine zweite Stirnfläche begrenzt ist. Das Segment ist über die Seitenflächen mit mindestens einem weiteren Segment zur Bildung des ringförmigen Klauenpol-Stators verbindbar, wobei zueinander benachbart anordenbare Segmente einander über eine erste Kontaktfläche der ersten Seitenfläche oder über eine zweite Kontaktfläche der zweiten Seitenfläche kontaktieren. Die Kontaktflächen sind so geformt, dass über die Kontaktflächen jeweils eine in der Umfangsrichtung formschlüssige Verbindung mit einer komplementär geformten Kontaktfläche eines benachbart anordenbaren Segments ausbildbar ist.

Insbesondere erstreckt sich zumindest eine (bevorzugt beide) der Kontaktflächen parallel zur axialen Richtung.

Insbesondere erstreckt sich ein Pol des Segments ausgehend von einer Grundfläche entlang der axialen Richtung und verjüngt sich dabei. Der Pol weist im Bereich der Verjüngung eine größte Querschnittsfläche und eine kleinste Querschnittsfläche, jeweils quer zur axialen Richtung, auf. Ein Verhältnis von größter Querschnittsfläche zu kleinster Querschnittsfläche mindestens beträgt zwei (2) und bevorzugt mindestens drei (3).

Erfindungsgemäß ist das Segment pulvermetallurgisch durch Verpressen und Wärmebehandeln hergestellt.

Gemäß einem weiteren Aspekt wird ein Transversalfluss-Motor vorgeschlagen, zumindest umfassend einen Stator und einen Rotor, wobei der Stator zumindest zwei der vorstehend beschriebenen Klauenpol-Statoren umfasst, wobei erste Pole des ersten Klauenpol-Stators und zweite Pole des zweiten Klauenpol-Stators entlang der Umfangsrichtung wechselweise und jeweils benachbart zueinander und in der axialen Richtung einander überlappend angeordnet sind. Dabei werden die Klauenpol-Statoren so zueinander angeordnet, dass die Pole ausgehend von der Grundfläche sich entlang der axialen Richtung hin zum anderen Klauenpol-Stator erstrecken.

Die axiale Richtung ist parallel zu einer Drehachse des Transversalfluss-Motors ausgerichtet.

Insbesondere erstreckt sich der Rotor ringförmig und weist entlang der Umfangsrichtung eine Vielzahl von Permanentmagneten auf, wobei zwischen Rotor und Stator ein in der Umfangsrichtung umlaufender Luftspalt vorgesehen ist, der in der radialen Richtung höchstens 350 µm [Mikrometer], insbesondere höchstens 250 µm, bevorzugt höchstens 150 µm beträgt, wobei der Luftspalt eine Abweichung von höchstens 50 µm, insbesondere von höchstens 25 µm, aufweist.

Die Ausführungen zu dem Klauenpol-Stator gelten gleichermaßen für das Segment und/oder den Transversalfluss-Motor sowie umgekehrt.

Der Transversalfluss-Motor ist insbesondere für elektrisch betriebene Fahrräder (Pedelecs) einsetzbar.

Vorsorglich sei angemerkt, dass die hier verwendeten Zahlwörter ("erste", "zweite",...) vorrangig (nur) zur Unterscheidung von mehreren gleichartigen Gegenständen oder Größen dienen, also insbesondere keine Abhängigkeit und/oder Reihenfolge dieser Gegenstände oder Größen zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: einen Transversalfluss-Motor in einer perspektivischen Ansicht in einer Explosionsdarstellung;
- Fig. 2:: den Transversalfluss-Motor nach Fig. 1 in einer perspektivischen Ansicht, zum Teil im Schnitt;
- Fig. 3:: einen Teil des Transversalfluss-Motors nach Fig. 1 und 2 in einer perspektivischen Ansicht;
- Fig. 4:: einen Klauenpol-Stator in einer perspektivischen Ansicht;
- Fig. 5:: ein Segment in einer ersten perspektivischen Ansicht;
- Fig. 6:: das Segment nach Fig. 5 in einer zweiten perspektivischen Ansicht; und
- Fig. 7:: ein Segment nach Fig. 5 und 6 in einer Seitenansicht.

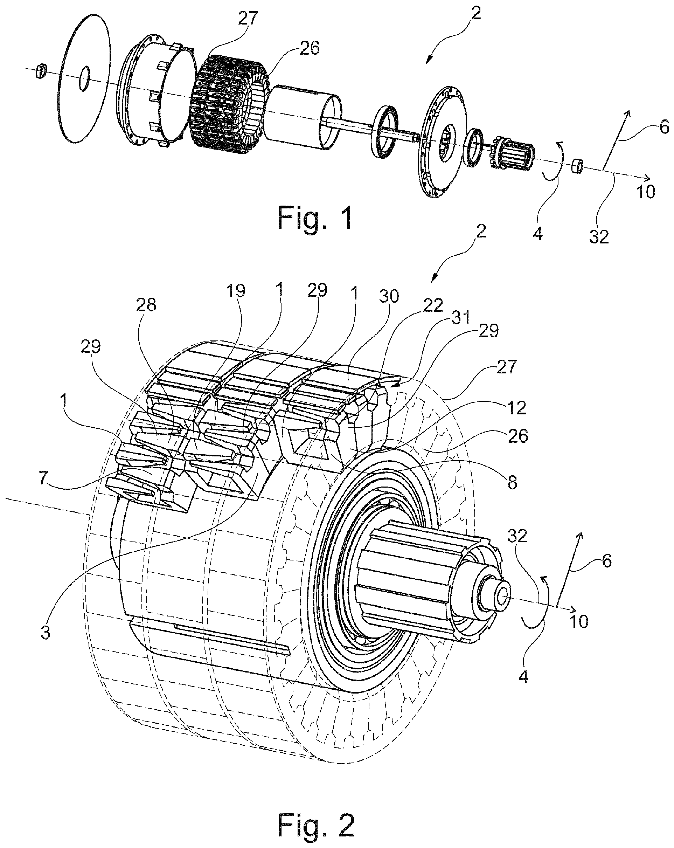

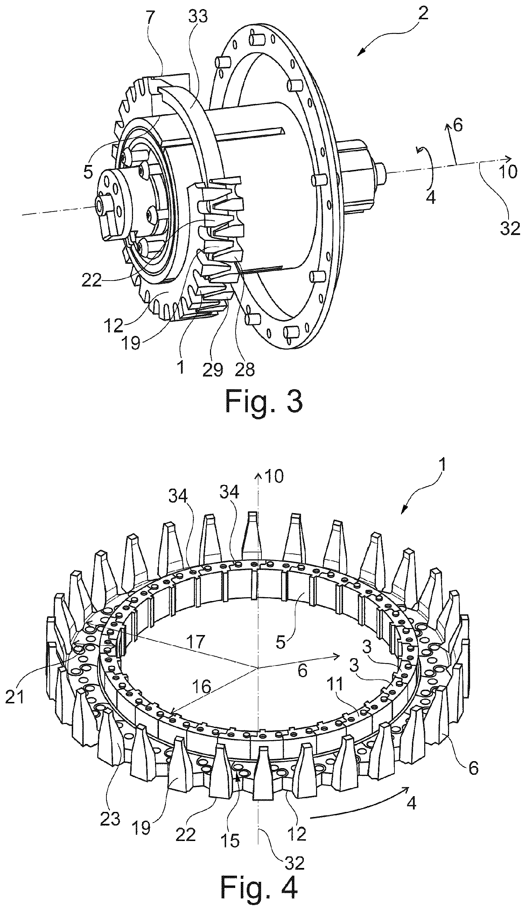

Fig. 1 zeigt einen Transversalfluss-Motor 2 in einer perspektivischen Ansicht in einer Explosionsdarstellung. Fig. 2 zeigt den Transversalfluss-Motor 2 nach Fig. 1 in einer perspektivischen Ansicht, zum Teil im Schnitt. Fig. 3 zeigt einen Teil des Transversalfluss-Motors nach Fig. 1 und 2 in einer perspektivischen Ansicht. Die Fig. 1 bis 3 werden im Folgenden gemeinsam beschrieben.

Der Transversalfluss-Motor 2 umfasst unter anderem einen Stator 26 und einen Rotor 27, wobei der Stator 26 hier sechs der Klauenpol-Statoren 1 umfasst, wobei erste Pole 19 jedes ersten Klauenpol-Stators 1 und zweite Pole 28 jedes zweiten Klauenpol-Stators 29 entlang der Umfangsrichtung 4 wechselweise und jeweils benachbart zueinander und in der axialen Richtung 10 einander überlappend angeordnet sind. Dabei werden die Klauenpol-Statoren 1, 29 so zueinander angeordnet, dass die Pole 19, 28 ausgehend von der Grundfläche 22 sich entlang der axialen Richtung 10 hin zum anderen Klauenpol-Stator 29, 1 erstrecken.

Die axiale Richtung 10 ist parallel zu einer Drehachse 32 des Transversalfluss-Motors 2 ausgerichtet.

Der Rotor 27 erstreckt sich ringförmig und weist entlang der Umfangsrichtung 4 eine Vielzahl von Permanentmagneten 30 auf, wobei zwischen Rotor 27 und Stator 26 ein in der Umfangsrichtung 4 umlaufender Luftspalt 31 vorgesehen ist.

Jeder Klauenpol-Stator 1, 29 ist durch eine Vielzahl von Segmenten 3 gebildet, die entlang einer Umfangsrichtung 4 nebeneinander angeordnet den ringförmigen Klauenpol-Stator 1, 29 bilden. Jedes Segment 3 erstreckt sich ausgehend von einer Innenumfangsfläche 5 entlang einer radialen Richtung 6 hin zu einer Außenumfangsfläche 7 und ist in der Umfangsrichtung 4 durch eine erste Seitenfläche 8 und eine zweite Seitenfläche 9 und in einer axialen Richtung 10 durch eine erste Stirnfläche 11 und eine zweite Stirnfläche 12 begrenzt. Jedes Segment 3 ist über die Seitenflächen 8, 9 mit weiteren Segmenten 3 zur Bildung des ringförmigen Klauenpol-Stators 1 verbunden. In den Fig. 1 bis 3 sind die formschlüssigen Verbindungen 15 der Segmente 3 nicht gezeigt.

Es werden jeweils zwei Klauenpol-Statoren 1, 29 entlang der axialen Richtung 10 nebeneinander angeordnet, wobei sie über die ersten Stirnflächen 11 einander kontaktieren. Jeder Klauenpol-Stator 1, 29 weist eine Vielzahl von Polen 19, 28 auf, die sich ausgehend von einer Grundfläche 22 entlang der axialen Richtung 10 erstrecken. Erste Pole 19 des ersten Klauenpol-Stators 1 und zweite Pole 28 des zweiten Klauenpol-Stators 29 sind entlang der Umfangsrichtung 4 wechselweise und jeweils benachbart zueinander und in der axialen Richtung 10 einander überlappend, aber beabstandet zueinander, angeordnet. Die Pole 19, 28 sind an der Außenumfangsfläche 7 der Segmente 3 angeordnet. Die Klauenpol-Statoren 1, 29 kontaktieren einander über die ersten Stirnflächen 11 an der Innenumfangsfläche 5. In dem Zwischenraum der Klauenpol-Statoren 1, 29, in der axialen Richtung 10 zwischen den ersten Stirnflächen 11 und in der radialen Richtung 6 zwischen den sich kontaktierenden ersten Stirnflächen 11 im Bereich der Innenumfangsfläche 5 und den Polen 19, 28 an der Außenumfangsfläche 7 kann eine Spule 33 in der Umfangsrichtung 4 umlaufend zwischen den Klauenpol-Statoren 1 angeordnet werden.

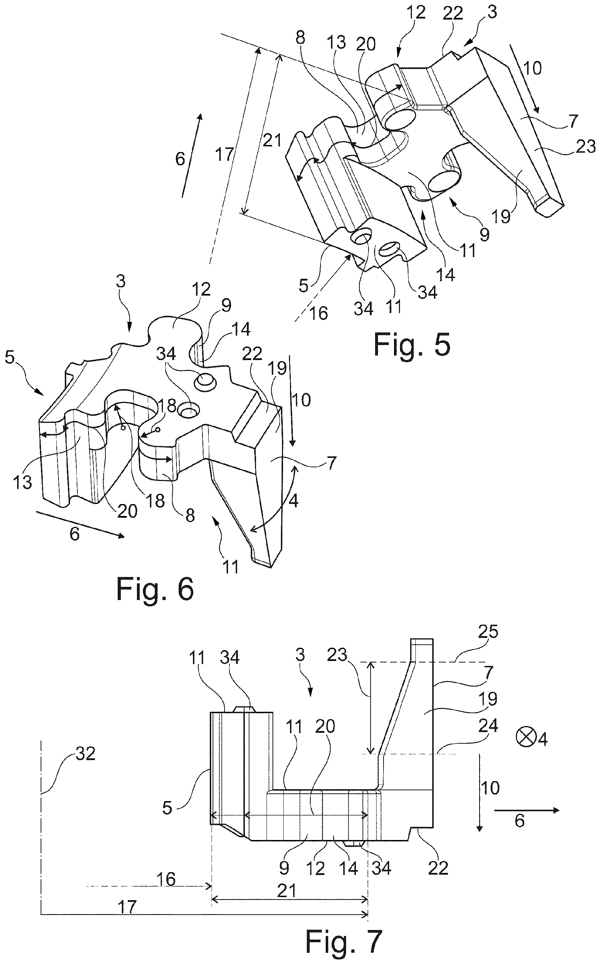

Fig. 4 zeigt einen Klauenpol-Stator 1 in einer perspektivischen Ansicht. Der Klauenpol-Stator 1 ist durch eine Vielzahl von Segmenten 3 gebildet, die entlang einer Umfangsrichtung 4 nebeneinander angeordnet den ringförmigen Klauenpol-Stator 1 bilden. Jedes Segment 3 erstreckt sich ausgehend von einer Innenumfangsfläche 5 entlang einer radialen Richtung 6 hin zu einer Außenumfangsfläche 7 und ist in der Umfangsrichtung 4 durch eine erste Seitenfläche 8 und eine zweite Seitenfläche 9 und in einer axialen Richtung 10 durch eine erste Stirnfläche 11 und eine zweite Stirnfläche 12 begrenzt. Jedes Segment 3 ist über die Seitenflächen 8, 9 mit weiteren Segmenten 3 zur Bildung des ringförmigen Klauenpol-Stators 1 verbunden. Zueinander benachbart angeordnete Segmente 3 kontaktieren einander über eine erste Kontaktfläche 13 der ersten Seitenfläche 8 oder über eine zweite Kontaktfläche 14 der zweiten Seitenfläche 9 des jeweiligen Segments 3 (siehe auch Fig. 5 bis 7) und bilden über die Kontaktflächen 13, 14 eine in der Umfangsrichtung 4 formschlüssige Verbindung 15 aus.

Die formschlüssigen Verbindungen 15 entstehen durch das Ineinandergreifen von mindestens zwei Verbindungspartnern (hier die Segmente 3). Dadurch können sich die Verbindungspartner auch ohne oder bei unterbrochener Kraftübertragung nicht lösen. Anders ausgedrückt ist bei einer formschlüssigen Verbindung 15 der eine Verbindungspartner dem anderen im Weg (hier gegenüber einer relativen Bewegung zueinander in der Umfangsrichtung 4). Mit den formschlüssigen Verbindungen 15 können die einzelnen Segmente 3 zu dem ringförmigen Klauenpol-Stator 1 zusammengesetzt werden.

Die Kontaktflächen 13, 14 erstrecken sich zwischen einem ersten Radius 16 und einem zweiten Radius 17 entlang der radialen Richtung 10 mäanderförmig. Die Pole 19 sind in der radialen Richtung 6 außerhalb der Kontaktflächen 13, 14 angeordnet. An jeder Seitenfläche 8, 9 des Segments 3 ist eine Kontaktfläche 13, 14 vorgesehen. Die Kontaktfläche 13, 14 umfasst eine Teilfläche der Seitenfläche 8, 9. Die Kontaktflächen 13, 14 erstrecken sich über jeweils die gesamte Erstreckung der Seitenfläche 8, 9 entlang der axialen Richtung 10. Die Kontaktflächen 13, 14 erstrecken sich nur über einen Teil der Erstreckung der Seitenfläche 8, 9 entlang der radialen Richtung 6.

Entlang der radialen Richtung 6 erstrecken sich die Kontaktflächen 13, 14 mäanderförmig, wobei durch die mäandernde Form der Kontaktflächen 13, 14 die formschlüssige Verbindung 15 mit einem benachbart angeordneten Segment 3 gebildet wird.

Hier sind alle Segmente 3 identisch zueinander ausgeführt, so dass das erste Segment 3 über dessen erste Kontaktfläche 13 das zweite Segment 3 über dessen zweite Kontaktfläche 14 kontaktiert. Gleiches gilt dann entsprechend für die andere zweite Seitenfläche 9 des ersten Segments 3 und die dort angeordnete zweite Kontaktfläche 14.

Fig. 5 zeigt ein Segment 3 in einer ersten perspektivischen Ansicht. Fig. 6 zeigt das Segment 3 nach Fig. 5 in einer zweiten perspektivischen Ansicht. Fig. 7 zeigt ein Segment 3 nach Fig. 5 und 6 in einer Seitenansicht. Die Fig. 5 bis 7 werden im Folgenden gemeinsam beschrieben.

Das Segment 3 erstreckt sich ausgehend von einer Innenumfangsfläche 5 entlang einer radialen Richtung 6 hin zu einer Außenumfangsfläche 7 und ist in der Umfangsrichtung 4 durch eine erste Seitenfläche 8 und eine zweite Seitenfläche 9 und in einer axialen Richtung 10 durch eine erste Stirnfläche 11 und eine zweite Stirnfläche 12 begrenzt. Das Segment 3 ist über die Seitenflächen 11 mit weiteren Segmenten 3 zur Bildung des ringförmigen Klauenpol-Stators 1 verbindbar, wobei zueinander benachbart anordenbare Segmente 3 einander über eine erste Kontaktfläche 13 der ersten Seitenfläche 8 oder über eine zweite Kontaktfläche 14 der zweiten Seitenfläche 9 kontaktieren. Die Kontaktflächen 13, 14 sind so geformt, dass über die Kontaktflächen 13, 14 jeweils eine in der Umfangsrichtung 4 formschlüssige Verbindung 15 mit einer komplementär geformten Kontaktfläche 14, 13 eines benachbart anordenbaren Segments 3 ausbildbar ist.Beide Kontaktflächen 13, 14 erstrecken sich parallel zur axialen Richtung 10.

Ein Pol 19 des Segments 3 erstreckt sich ausgehend von einer Grundfläche 22 entlang der axialen Richtung 10 und verjüngt sich dabei. Der Pol 19 weist im Bereich der Verjüngung 23 eine größte Querschnittsfläche 24 und eine kleinste Querschnittsfläche 25, jeweils quer zur axialen Richtung 10, auf.

An den Stirnflächen 11, 12 der Segmente 3 sind Positionierungshilfen 34 vorgesehen, die mit korrespondierenden Positionierungshilfen 34 an den gegenüberliegenden Stirnflächen 11, 12 von benachbart angeordneten Segmenten eines anderen Klauenpol-Stators 1 zusammenwirken (hier: Erhebungen und Vertiefungen).

Die Kontaktflächen 13, 14 erstrecken sich zwischen einem ersten Radius 16 und einem zweiten Radius 17 entlang der radialen Richtung 10 mäanderförmig.

Die Pole 19 sind in der radialen Richtung 6 außerhalb der Kontaktflächen 13, 14 angeordnet.

An jeder Seitenfläche 8, 9 des Segments 3 ist eine Kontaktfläche 13, 14 vorgesehen. Die Kontaktfläche 13, 14 umfasst eine Teilfläche der Seitenfläche 8, 9. Die Kontaktflächen 13, 14 erstrecken sich über jeweils die gesamte Erstreckung der Seitenfläche 8, 9 entlang der axialen Richtung 10. Die Kontaktflächen 13, 14 erstrecken sich nur über einen Teil der Erstreckung der Seitenfläche 8, 9 entlang der radialen Richtung 6.

Entlang der radialen Richtung 6 erstrecken sich die Kontaktflächen 13, 14 mäanderförmig, wobei durch die mäandernde Form der Kontaktflächen 13, 14 die formschlüssige Verbindung 15 mit einem benachbart angeordneten Segment 3 gebildet wird. Die Kontaktflächen 13, 14 weisen entlang des mäanderförmigen Verlaufs einen kleinsten Krümmungsradius 18 auf.

Ein solcher Mindestradius reduziert das Risiko von Rissbildungen in dem Segment 3, die gerade bei scharfkantigen Ausführungen einer formschlüssigen Verbindung 15 (z. B. ein Schwalbenschwanz) auftreten können.

Hier weisen Kontaktflächen 13, 14 entlang des mäanderförmigen Verlaufs einen ausschließlich gekrümmten Verlauf auf. Hier sind also in der radialen Richtung 6 keine geradlinigen Bereiche der Kontaktflächen 13, 14 vorgesehen. D. h. das jeder Punkt der Kontaktflächen 13, 14 entlang der radialen Richtung 6 durch einen (sich entlang der radialen Richtung 6 verändernden) Krümmungsradius 18 gebildet ist.

Die Kontaktflächen 13, 14 erstrecken sich entlang des mäanderförmigen Verlaufs über eine Länge 20, die um einen Faktor größer ist als ein Abstand 21 zwischen dem ersten Radius 16 und dem zweiten Radius 17 entlang der radialen Richtung 6. Infolge des mäanderförmigen Verlaufs werden also die Kontaktflächen 13, 14 in der radialen Richtung 6 verlängert (gegenüber einem geradlinigen Verlauf zwischen dem ersten Radius 16 und dem zweiten Radius 17 entlang der radialen Richtung 6) und somit vergrößert.

### Bezugszeichenliste

- 1: erster Klauenpol-Stator
- 2: Transversalfluss-Motor
- 3: Segment
- 4: Umfangsrichtung
- 5: Innenumfangsfläche
- 6: radiale Richtung
- 7: Außenumfangsfläche
- 8: erste Seitenfläche
- 9: zweite Seitenfläche
- 10: axiale Richtung
- 11: erste Stirnfläche
- 12: zweite Stirnfläche
- 13: erste Kontaktfläche
- 14: zweite Kontaktfläche
- 15: Verbindung
- 16: erster Radius
- 17: zweiten Radius
- 18: Krümmungsradius
- 19: Pol
- 20: Länge
- 21: Abstand
- 22: Grundfläche
- 23: Verjüngung
- 24: größte Querschnittsfläche
- 25: kleinste Querschnittsfläche
- 26: Stator
- 27: Rotor
- 28: zweiter Pol
- 29: zweiter Klauenpol-Stator
- 30: Permanentmagnet
- 31: Luftspalt
- 32: Drehachse
- 33: Spule
- 34: Positionierungshilfe

## Patentansprüche

1. Segment (3) für einen Klauenpol-Stator (1, 29), wobei sich das Segment (3) ausgehend von einer Innenumfangsfläche (5) entlang einer radialen Richtung (6) hin zu einer Außenumfangsfläche (7) erstreckt und in einer Umfangsrichtung (4) durch eine erste Seitenfläche (8) und eine zweite Seitenfläche (9) und in einer axialen Richtung (10) durch eine erste Stirnfläche (11) und eine zweite Stirnfläche (12) begrenzt ist; wobei das Segment (3) über die Seitenflächen (8, 9) mit mindestens einem weiteren Segment (3) verbindbar ist; wobei zueinander benachbart anordenbare Segmente (3) einander über eine erste Kontaktfläche (13) der ersten Seitenfläche (8) oder über eine zweite Kontaktfläche (14) der zweiten Seitenfläche (9) kontaktieren; wobei die Kontaktflächen (13, 14) so geformt sind, dass über die Kontaktflächen (13, 14) jeweils eine in der Umfangsrichtung (4) formschlüssige Verbindung (15) mit einer komplementär geformten Kontaktfläche (14, 13) eines benachbart anordenbaren Segments (3) ausbildbar ist; wobei das Segment (3) pulvermetallurgisch durch Verpressen und Wärmebehandeln hergestellt ist; wobei sich zumindest eine der Kontaktflächen (13, 14) zwischen einem ersten Radius (16) und einem zweiten Radius (17) entlang der radialen Richtung (6) mäanderförmig erstreckt; wobei die zumindest eine Kontaktfläche (13, 14) entlang des mäanderförmigen Verlaufs einen kleinsten Krümmungsradius (18) von mindestens 1 mm [Millimeter] aufweist.

2. Segment (3) nach Patentanspruch 1, wobei sich zumindest eine der Kontaktflächen (13, 14) parallel zur axialen Richtung (10) erstreckt.

3. Segment (3) nach einem der vorhergehenden Patentansprüche 1 und 2, wobei sich ein Pol (19, 28) des Segments (3) ausgehend von einer Grundfläche (22) entlang der axialen Richtung (10) erstreckt und dabei verjüngt; wobei der Pol (19, 28) im Bereich der Verjüngung (23) eine größte Querschnittsfläche (24) und eine kleinste Querschnittsfläche (25), jeweils quer zur axialen Richtung (10), aufweist, wobei ein Verhältnis von größter Querschnittsfläche (24) zu kleinster Querschnittsfläche (25) mindestens 2 beträgt.

4. Klauenpol-Stator (1, 29) für einen Transversalfluss-Motor (2), wobei der Klauenpol-Stator (1, 29) durch eine Vielzahl von Segmenten (3) nach einem der vorhergehenden Patentansprüche 1 bis 3 gebildet ist, die entlang einer Umfangsrichtung (4) nebeneinander angeordnet sind; wobei sich jedes Segment (3) ausgehend von einer Innenumfangsfläche (5) entlang einer radialen Richtung (6) hin zu einer Außenumfangsfläche (7) erstreckt und in der Umfangsrichtung (4) durch eine erste Seitenfläche (8) und eine zweite Seitenfläche (9) und in einer axialen Richtung (10) durch eine erste Stirnfläche (11) und eine zweite Stirnfläche (12) begrenzt ist; wobei jedes Segment (3) über die Seitenflächen (8, 9) mit mindestens einem weiteren Segment (3) verbunden ist; wobei zueinander benachbart angeordnete Segmente (3) einander über eine erste Kontaktfläche (13) an der ersten Seitenfläche (8) oder über eine zweite Kontaktfläche (14) an der zweiten Seitenfläche (9) kontaktieren und über die Kontaktflächen (13, 14) eine in der Umfangsrichtung (4) formschlüssige Verbindung (15) ausbilden; wobei jedes der Segmente (3) pulvermetallurgisch durch Verpressen und Wärmebehandeln hergestellt ist; wobei sich zumindest eine der Kontaktflächen (13, 14) zwischen einem ersten Radius (16) und einem zweiten Radius (17) entlang der radialen Richtung (6) mäanderförmig erstreckt; wobei die zumindest eine Kontaktfläche (13, 14) entlang des mäanderförmigen Verlaufs einen kleinsten Krümmungsradius (18) von mindestens 1 mm [Millimeter] aufweist.

5. Klauenpol-Stator (1, 29) nach Patentanspruch 4, wobei die zumindest eine Kontaktfläche (13, 14) entlang des mäanderförmigen Verlaufs einen ausschließlich gekrümmten Verlauf aufweist.

6. Klauenpol-Stator (1, 29) nach einem der vorhergehenden Patentansprüche 4 und 5, wobei sich die zumindest eine Kontaktfläche (13, 14) entlang des mäanderförmigen Verlaufs über eine Länge (20) erstreckt, die um einen Faktor von mindestens 1,5 größer ist als ein Abstand (21) zwischen dem ersten Radius (16) und dem zweiten Radius (17) entlang der radialen Richtung (6).

7. Klauenpol-Stator (1, 29) nach einem der vorhergehenden Patentansprüche 4 bis 6, wobei jedes Segment (3) eine Mehrzahl von Polen (19, 28) umfasst.

8. Klauenpol-Stator (1, 29) nach einem der vorhergehenden Patentansprüche 4 bis 6, wobei jedes Segment (3) genau einen Pol (19, 28) aufweist.

9. Klauenpol-Stator (1, 29) nach einem der vorhergehenden Patentansprüche 4 bis 8, wobei der Klauenpol-Stator (1, 29) ausschließlich durch identisch ausgeführte Segmente (3) gebildet ist.

10. Klauenpol-Stator (1, 29) nach einem der vorhergehenden Patentansprüche 4 bis 9, wobei die Segmente (3) mit der Außenumfangsfläche (7) oder der Innenumfangsfläche (5) der Segmente (3) eine zylinderförmige Kontur bilden, wobei eine Umfangsfläche von Außenumfangsfläche (7) und Innenumfangsfläche (5) durch die Pole (19, 28) der Segmente (3) gebildet ist, wobei diese Umfangsfläche eine Abweichung von der zylinderförmigen Kontur von höchstens 50 µm aufweist.

11. Transversalfluss-Motor (2), zumindest umfassend einen Stator (26) und einen Rotor (27), wobei der Stator (26) zumindest zwei Klauenpol-Statoren (1, 29) nach einem der vorhergehenden Patentansprüche 4 bis 9 umfasst, wobei erste Pole (19) des ersten Klauenpol-Stators (1) und zweite Pole (28) des zweiten Klauenpol-Stators (29) entlang der Umfangsrichtung (4) wechselweise und jeweils benachbart zueinander und in der axialen Richtung (10) einander überlappend angeordnet sind.

12. Transversalfluss-Motor (2) nach Patentanspruch 11, wobei der Rotor (27) sich ringförmig erstreckt und entlang der Umfangsrichtung (4) eine Vielzahl von Permanentmagneten (30) aufweist; wobei zwischen Rotor (27) und Stator (26) ein in der Umfangsrichtung (4) umlaufender Luftspalt (31) vorgesehen ist, der in der radialen Richtung (6) höchstens 350 µm [Mikrometer] beträgt, wobei der Luftspalt (31) eine Abweichung von höchstens 50 µm aufweist.

## Claims

1. Segment (3) for a claw pole stator (1, 29), wherein the segment (3) extends starting from an inner circumference surface (5) along a radial direction (6) to an outer circumference surface (7) and is delimited in a circumference direction (4) by a first side surface (8) and a second side surface (9) and delimited in an axial direction (10) by a first end surface (11) and a second end surface (12); the segment (3) can be connected by means of the side surfaces (8, 9) to at least one other segment (3); segments (3) that can be positioned adjacent to each other contact each other by means of a first contact surface (13) of the first side surface (8) or by means of a second contact surface (14) of the second side surface (9); and the contact surfaces (13, 14) are shaped so that by means of the contact surfaces (13, 14), a connection (15) that is form-fitting in the circumference direction (4) can be formed with a complementarily shaped contact surface (14, 13) of a segment (3) that can be adjacently positioned; wherein the segment (3) is manufactured powder metallurgically by means of pressing and heat treatment; wherein at least one of the contact surfaces (13, 14) between a first radius (16) and a second radius (17) extends along the radial direction (6) in meandering fashion; wherein the at least one contact surface (13, 14) has a minimum curvature radius (18) of at least 1 mm [millimeter] along the meandering shape.

2. Segment (3) according to claim 1, wherein at least one of the contact surfaces (13, 14) extends parallel to the axial direction (10).

3. Segment (3) according to one of the preceding claims 1 and 2, wherein a pole (19, 28) of the segment (3) extends starting from a base surface (22) along the axial direction (10) and simultaneously tapers; in the region of the tapering (23), the pole (19, 28) has a largest cross-sectional area (24) and a smallest cross-sectional area (25), each transverse to the axial direction (10); and a ratio of the largest cross-sectional area (24) to the smallest cross-sectional area (25) is at least 2.

4. Claw pole stator (1, 29) for a transversal flux motor (2), wherein the claw pole stator (1, 29) is composed of a plurality of segments (3) according to one of the preceding claims 1 to 3, which are positioned next to one another along a circumference direction (4); each segment (3) extends starting from an inner circumference surface (5) along a radial direction (6) to an outer circumference surface (7) and is delimited in the circumference direction (4) by a first side surface (8) and a second side surface (9) and delimited in an axial direction (10) by a first end surface (11) and a second end surface (12); each segment (3) is connected by means of the side surfaces (8, 9) to at least one other segment (3); and segments that are positioned adjacent to each other (3) contact each other by means of a first contact surface (13) on the first side surface (8) or by means of a second contact surface (14) on the second side surface (9) and by means of the contact surfaces (13, 14), form a form-fitting connection (15) in the circumference direction (4); wherein each of the segments (3) is manufactured powder metallurgically by means of pressing and heat treatment; wherein at least one of the contact surfaces (13, 14) between a first radius (16) and a second radius (17) extends along the radial direction (6) in meandering fashion; wherein the at least one contact surface (13, 14) has a minimum curvature radius (18) of at least 1 mm [millimeter] along the meandering shape.

5. Claw pole stator (1, 29) according to claim 4, wherein along the meandering curve, the at least one contact surface (13, 14) has an exclusively curved shape.

6. Claw pole stator (1, 29) according to one of the preceding claims 4 and 5, wherein the at least one contact surface (13, 14) extends along the meandering shape over a length (20), which is greater by a factor of at least 1.5 than a distance (21) between the first radius (16) and the second radius (17) along the radial direction (6).

7. Claw pole stator (1, 29) according to one of the preceding claims 4 to 6, wherein each segment (3) comprises a plurality of poles (19, 28).

8. Claw pole stator (1, 29) according to one of the preceding claims 4 to 6, wherein each segment (3) has exactly one pole (19, 28).

9. Claw pole stator (1, 29) according to one of the preceding claims 4 to 8, wherein the claw pole stator (1, 29) is formed exclusively of identically embodied segments (3).

10. Claw pole stator (1, 29) according to one of the preceding claims 4 to 9, wherein the segments (3) form a cylindrical contour with the outer circumference surface (7) or the inner circumference surface (5) of the segments (3); a circumference surface of the outer circumference surface (7) and the inner circumference surface (5) is formed by the poles (19, 28) of the segments (3); and this circumference surface has a deviation from the cylindrical contour of at most 50 µm.

11. Transversal flux motor (2), at least comprising a stator (26) and a rotor (27), with the stator (26) comprising at least two claw pole stators (1, 29) according to one of the preceding claims 4 to 9, wherein first poles (19) of the first claw pole stator (1) and second poles (28) of the second claw pole stator (29) are positioned in alternating fashion along the circumference direction (4), respectively adjacent to one another and overlapping one another in the axial direction (10).

12. Transversal flux motor (2) according to claim 11, wherein the rotor (27) extends in annular fashion and, along the circumference direction (4), has a plurality of permanent magnets (30); between the rotor (27) and the stator (26), an air gap (31) is provided extending around in the circumference direction (4), which is at most 350 µm [micrometer] in the radial direction (6), and the air gap (31) and has a deviation of at most 50 µm.

## Revendications

1. Segment (3) pour un stator à pôle à griffes (1, 29), dans lequel le segment (3) s'étend en partant d'une surface circonférentielle intérieure (5) le long d'une direction radiale (6) jusqu'à une surface circonférentielle extérieure (7) et est limité dans une direction circonférentielle (4) par une première surface latérale (8) et une deuxième surface latérale (9) et dans une direction axiale (10) par une première surface frontale (11) et une deuxième surface frontale (12) ; dans lequel le segment (3) peut être relié à au moins un segment supplémentaire (3) par l'intermédiaire des surfaces latérales (8, 9) ; dans lequel des segments (3) disposés de manière adjacente les uns aux autres entrent en contact les uns avec les autres par une première surface de contact (13) de la première surface latérale (8) ou par une deuxième surface de contact (14) de la deuxième surface latérale (9) ; dans lequel les surfaces de contact (13, 14) sont formées de telle sorte que les surfaces de contact (13, 14) permettent de réaliser respectivement un assemblage à complémentarité de forme (15) dans une direction circonférentielle (4) avec une surface de contact (14, 13) de forme complémentaire d'un segment (3) pouvant être disposé de manière adjacente ; dans lequel le segment (3) est fabriqué par la métallurgie des poudres par compression et traitement thermique ; dans lequel au moins l'une des surfaces de contact (13, 14) s'étend de manière sinueuse entre un premier rayon (16) et un deuxième rayon (17) le long de la direction radiale (6) ; dans lequel ladite au moins une surface de contact (13, 14) présente le long du tracé sinueux le plus petit rayon de courbure (18) d'au moins un 1 mm [millimètre].

2. Segment (3) selon la revendication 1, dans lequel au moins l'une des surfaces de contact (13, 14) s'étend en parallèle à la direction axiale (10).

3. Segment (3) selon l'une quelconque des revendications précédentes 1 et 2, dans lequel un pôle (19, 28) du segment (3) s'étend en partant d'une surface de base (22) le long de la direction axiale (10) tout en se rétrécissant ; dans lequel le pôle (19, 28) présente au niveau du rétrécissement (23) la plus grande superficie de la section (24) et la plus petite superficie de la section (25), respectivement transversalement à la direction axiale (10), dans lequel un rapport entre la plus grande superficie de la section (24) et la plus petite superficie de la section (25) est au moins égal à 2.

4. Stator à pôle à griffes (1, 29) destiné à un moteur à flux transverse (2), dans lequel le stator à pôle à griffes (1, 29) est formé par une pluralité de segments (3) selon l'une quelconque des revendications précédentes 1 à 3, qui sont disposés le long d'une direction circonférentielle (4) ; dans lequel chaque segment (3) s'étend en partant d'une surface circonférentielle intérieure (5) le long d'une direction radiale (6) jusqu'à une surface circonférentielle extérieure (7), et est limité dans la direction circonférentielle (4) par une première surface latérale (8) et une deuxième surface latérale (9) et dans une direction axiale (10) par une première surface frontale (11) et une deuxième surface frontale (12) ; dans lequel chaque segment (3) est relié à au moins un segment supplémentaire (3) par l'intermédiaire des surfaces latérales (8, 9) ; dans lequel des segments (3) disposés de manière adjacente les uns aux autres entrent en contact les uns avec les autres par une première surface de contact (13) sur la première surface latérale (8) ou par une deuxième surface de contact (14) sur la deuxième surface latérale (9) et réalisent un assemblage à complémentarité de forme (15) dans la direction circonférentielle (4) par l'intermédiaire des surfaces de contact (13, 14); dans lequel chacun des segments (3) est fabriqué par la métallurgie des poudres par compression et traitement thermique ; dans lequel au moins l'une des surfaces de contact (13, 14) s'étend de manière sinueuse entre un premier rayon (16) et un deuxième rayon (17) le long de la direction radiale (6) ; dans lequel ladite au moins une surface de contact (13 ; 14) présente le long du tracé sinueux le plus petit rayon de courbure (18) d'au moins 1 mm [millimètre].

5. Stator à pôle à griffes (1, 29) selon la revendication 4, dans lequel ladite au moins une surface de contact (13, 14) présente un tracé exclusivement courbe le long du tracé sinueux.

6. Stator à pôle à griffes (1, 29) selon l'une quelconque des revendications précédentes 4 et 5, dans lequel ladite au moins une surface de contact (13, 14) s'étend le long du tracé sinueux sur une longueur (20) qui est supérieure d'un facteur d'au moins 1,5 à une distance (21) entre le premier rayon (16) et le deuxième rayon (17) le long de la direction radiale (6).

7. Stator à pôle à griffes (1, 29) selon l'une quelconque des revendications précédentes 4 à 6, dans lequel chaque segment (3) comprend une pluralité de pôles (19, 28).

8. Stator à pôle à griffes (1, 29) selon l'une quelconque des revendications précédentes 4 à 6, dans lequel chaque segment (3) présente exactement un pôle (19, 28).

9. Stator à pôle à griffes (1, 29) selon l'une quelconque des revendications précédentes 4 à 8, dans lequel le stator à pôle à griffes (1, 29) est formé exclusivement par des segments (3) réalisés de manière identique.

10. Stator à pôle à griffes (1, 29) selon l'une quelconque des revendications précédentes 4 à 9, dans lequel les segments (3) forment un contour cylindrique avec la surface circonférentielle extérieure (7) ou la surface circonférentielle intérieure (5) des segments (3), dans lequel une surface circonférentielle de la surface circonférentielle extérieure (7) et de la surface circonférentielle intérieure (5) est formée par les pôles (19, 28) des segments (3), dans lequel cette surface circonférentielle présente un écart du contour cylindrique d'un maximum de 50 µm.

11. Moteur à flux transverse (2), comprenant au moins un stator (26) et un rotor (27), dans lequel le stator (26) comprend au moins deux stators à pôle à griffes (1, 29) selon l'une quelconque des revendications précédentes 4 à 9, dans lequel des premiers pôles (19) du premier stator à pôle à griffes (1) et des deuxièmes pôles (28) du deuxième stator à pôle à griffes (29) sont disposés le long de la direction circonférentielle (4) en alternance et respectivement de manière adjacente les uns aux autres et dans la direction axiale (10) en se chevauchant les uns les autres.

12. Moteur à flux transverse (2) selon la revendication 11, dans lequel le rotor (27) s'étend de manière annulaire et présente le long de la direction circonférentielle (4) une pluralité d'aimants permanents (30) ; dans lequel entre le rotor (27) et le stator (26), un entrefer (31) périphérique est prévu dans la direction circonférentielle (4) qui mesure dans la direction radiale (6) au maximum 350 µm [micromètre], l'entrefer (31) présentant un écart d'un maximum de 50 µm.
